Europäisches Patentamt

European Patent Office

Office européen des brevets

(19)

(11) Veröffentlichungsnummer: **0 406 460 A1**

## (12) EUROPÄISCHE PATENTANMELDUNG

(21) Anmeldenummer: 89112159.2

(22) Anmeldetag: 04.07.89

(51) Int. Cl.5: **G01L 9/08, G01L 21/22**

(43) Veröffentlichungstag der Anmeldung:
**09.01.91 Patentblatt 91/02**

(84) Benannte Vertragsstaaten:
**DE**

(71) Anmelder: **LEYBOLD AKTIENGESELLSCHAFT**
**Bonner Strasse 498**
**D-5000 Köln 51(DE)**

(72) Erfinder: **Benes, Ewald, Dr.**
**Klosterstrasse 23**
**A-2362 Biedermannsdorf(AT)**
Erfinder: **Müller, Walter**

**Am Galgenberg 8**
**D-6497 Steinau 6(DE)**
Erfinder: **Stürmer, Johann**
**Pestalozzistrasse 8**
**D-6493 Freigericht(DE)**
Erfinder: **Thorn, Gernot**
**Posenerstrasse 8**
**D-6450 Hanau 1(DE)**

(74) Vertreter: **Leineweber, Jürgen, Dipl.-Phys.**
**Nagelschmiedshütte 8**
**D-5000 Köln 40(DE)**

(54) **Verfahren zur Messung des Druckes.**

(57) Die Erfindung betrifft ein Verfahren zur Messung des Druckes mit Hilfe eines Gasreibungsvakuummeters, das mit einem Oszillator und mit einem Schwingquarz als Sensor ausgerüstet ist und bei dem die druckabhängigen Dämpfungserscheinungen der Quarzschwingungen zur Meßwertbildung herangezogen werden; um bei diesem Verfahren genauere Meßwerte zu erzielen, wird vorgeschlagen, daß zur Meßwerterfassung der Oszillator (2) vom Schwingquarz (1) getrennt wird und daß aus dem Ausschwingverhalten des Quarzes der Druckwert gewonnen wird.

FIG. 2

EP 0 406 460 A1

## VERFAHREN ZUR MESSUNG DES DRUCKES

Die Erfindung bezieht sich auf ein Verfahren zur Messung des Druckes mit Hilfe eines Gasreibungsvakuummeters, das mit einem Oszillator und mit einem Schwingquarz als Sensor ausgerüstet ist und bei dem die druckabhängigen Dämpfungserscheinungen der Quarzschwingungen zur Meßwertbildung herangezogen werden. Außerdem bezieht sich die Erfindung auf eine für die Erfassung des Meßwertes geeignete Schaltung.

Bei mit Schwingquarzen als Sensor ausgerüsteten Gasreibungsvakuummetern befindet sich der Kristall innerhalb des Raumes, in dem der Druck gemessen werden soll. Der zu Schwingungen angeregte Quarz überträgt Energie auf die auftreffenden Gasmoleküle. Dieses führt zu einem Energieentzug und damit zu einer Dämpfung der Schwingung des Quarzes. Je höher die Anzahl der auf den Quarz auftreffenden Gasmoleküle ist, d. h. je höher der Druck des Gases ist, desto höher ist der Energieverlust bzw. die Dämpfung der Schwingungen. Aus der vom Gasdruck abhängigen Dämpfung der Schwingungen des Schwingquarzes läßt sich deshalb der Gasdruck bestimmen. Die Anzeige ist daher auch von Temperatur und Gasart abhängig.

Aus der DE-OS 36 41 842 ist ein Verfahren zur Messung des Druckes mit den eingangs erwähnten Merkmalen bekannt. Aus der vom Druck abhängigen Dämpfung des Schwingquarzes und der daraus resultierenden Veränderung des Gütefaktors des Resonatorsystems wird der Gasdruck ermittelt. Dazu wird ein Analogsignal gebildet, das abhängig bzw. in bestimmten Druckbereichen sogar proportional zur Amplitude der Schwingungen des Schwingquarzes ist. Die Amplitude ist ein Maß für die druckabhängige Dämpfung der Schwingungen und damit für den ebenfalls druckabhängigen Gütefaktor, so daß daraus der Gasdruck abgeleitet werden kann. Diese vorbekannte Ermittlung des Druckwertes ist relativ ungenau, da das Meßsignal als Analogsignal vorliegt, so daß für den Fall der digitalen Anzeige und/oder Weiterverarbeitung der Meßsignale ein Analog/ Digital-Wandler erforderlich ist, mit entsprechenden Wandlungsfehlern. Eine Eichung der Meßaufnehmer ist nur möglich beim direkten Messen an einem Rezipienten durch Vergleich mit einem Kalibrier-Meßgerät.

Der vorliegenden Erfindung liegt die Aufgabe zugrunde, ein Druckmeßverfahren der eingangs genannten Art derart zu verbessern, daß die erwähnten Nachteile nicht mehr bestehen.

Erfindungsgemäß wird diese Aufgabe dadurch gelöst, daß zur Meßwerterfassung der Oszillator vom Schwingquarz getrennt wird und daß aus dem Ausschwingverhalten des Quarzes der Druckwert gewonnen wird. Besonders zweckmäßig ist es, wenn der Meßwerterfassung eine Messung derjenigen Zeit zugrundegelegt wird, die für das Absinken der Schwingungsamplitude zwischen zwei festen Pegeln benötigt wird. Eine solche Zeitmessung kann dadurch in einfacher Weise bewerkstelligt werden, daß die zwischen diesen Pegeln liegenden Schwingungen des Quarzes gezählt werden. Messungen dieser Art können mit hoher Empfindlichkeit durchgeführt werden, so daß sich eine hohe Auflösung ergibt. Ein besonderer Vorteil besteht darin, daß das Meßsignal bereits als Digitalsignal vorliegt und damit einer einfacher Auswertung zugeführt werden kann. Weiterhin ist vorteilhaft, daß der Meßaufnehmer mit Hilfe eines Kalibrierwiderstandes bei Atmosphärendruck geeicht werden kann. Zudem ist der mechanische und elektronische Aufwand gering.

Es besteht auch die Möglichkeit, als Meßsignal einen Analogwert zu erfassen. Dieses kann dadurch geschehen, daß der Meßwerterfassung eine Messung desjenigen Analogwertes zugrundegelegt wird, welcher sich nach dem Durchzählen einer fest vorgegebenen Schwingungsanzahl nach dem Durchgang durch einen oberen Triggerpegel $U_o$ ergibt.

Weitere Vorteile und Einzelheiten der Erfindung sollen anhand der Figuren 1 bis 6 erläutert werden. Es zeigen:

- Figur 1 ein stark vereinfachtes Schaltbild zur Durchführung des erfindungsgemäßen Meßverfahrens
- Figuren 2 und 3 Kurven zum Ausschwingverhalten eines Quarzes,
- Figur 4 ein Ausführungsbeispiel für eine Meßröhre sowie
- Figuren 5 und 6 ein weiteres Blockschaltbild bzw. Kurven zur Funktionserläuterung.

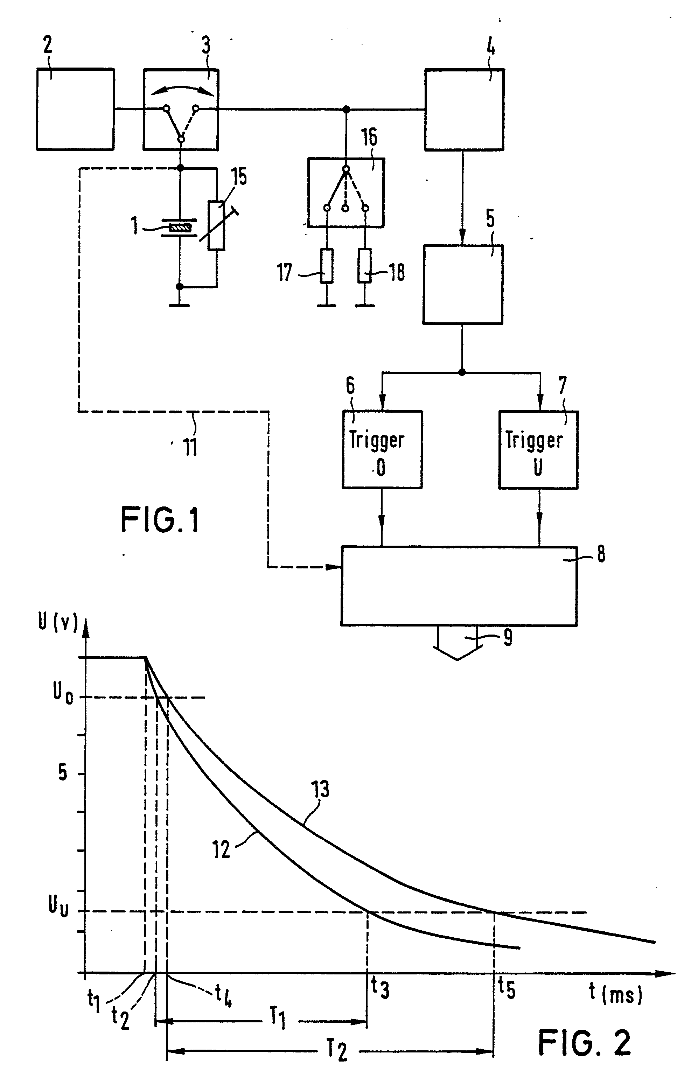

In Figur 1 ist der Quarzsensor mit 1 bezeichnet. Er befindet sich in einem im einzelnen nicht dargestellten Raum, in dem der Druck gemessen werden soll. Mit Hilfe des Oszillators 2 wird der Quarz 1 in bekannter Weise zu Schwingungen angeregt. Zwischen dem Quarz 1 und dem Oszillator 2 befindet sich der schematisch dargestellte Schalter 3, mit dessen Hilfe der Quarz 1 vom Oszillator 2 getrennt werden kann. Solange Quarz 1 und Oszillator 2 miteinander verbunden sind, ist die Schwingungsamplitude der vom Quarz ausgeführten Schwingung annähernd konstant, weil Dämpfungsverluste durch die Oszillator-Elektronik ersetzt werden. Nach der Trennung tritt eine Dämpfung der Schwingungen infolge der auf den Quarz auftreffenden Moleküle auf.

Über den Schalter 3 werden diesem gedämpften Schwingungsverlauf entsprechende Signale dem Impedanzwandler 4 zugeführt. Das verstärkte Signal wird über einen Demodulator 5 auf zwei Triggerstufen 6 und 7 gegeben. Mit Hilfe der Triggerstufe 6 wird ein oberes Spannungssignal $U_o$ festgelegt. Die Definition eines unteren Spannungssignales $U_u$ erfolgt mit Hilfe der Triggerstufe 7. Diese beiden Spannungswerte entsprechen Amplitudenpegeln, zwischen denen eine Zeitmessung durchgeführt wird. Für die Zeitmessung ist die Zählstufe 8 vorgesehen, welche ihrerseits am Ausgang 9 ein digitales Signal abgibt.

Die Zeitmessung erfolgt über die Zählung von Impulsen. Dazu kann ein separater Taktgenerator eingesetzt werden. Beim dargestellten Ausführungsbeispiel ist die Zählstufe 8 über die Leitung 11 mit dem Quarz 1 verbunden. Für die Zeitmessung werden die Schwingungen gezählt, die der Quarz zwischen den beiden Pegeln, festgelegt durch die Triggerstufen 6 und 7, ausführt.

Figur 2 läßt den Zeitverlauf während der Messungen erkennen. In dem dargestellten Koordinatensystem ist die Spannung, die die Amplitudenänderung der gedämpften Schwingung kennzeichnet, gegen die Zeit eingezeichnet. Zum Zeitpunkt $t_1$ wird der Quarz 1 vom Oszillator 2 getrennt. Mit diesem Zeitpunkt beginnt eine gedämpfte Schwingung, deren Amplitude - je nach Druck - einen den Kurven 12 und 13 entsprechenden Verlauf hat.

Zum Zeitpunkt $t_2$ erreicht die Kurve 12 den Spannungswert $U_o$, der durch die Triggerstufen 6 festgelegt ist. Mit diesem Zeitpunkt beginnt die Zählung der vom Quarz 1 ausgeführten Schwingungen, und zwar bis zum Zeitpunkt $t_3$, in dem die Schwingungsamplitude den unteren Spannungspegel $U_u$, festgelegt durch die Triggerstufe 7, erreicht. Die gemessene Zeit $T_1$ liegt am Ausgang 9 unmittelbar als Digitalsignal vor. Die Kurve 13 in Figur 2 entspricht einem Amplitudenverlauf bei niedrigerem Druck, also weniger gedämpfter Schwingung. Die Kurve 13 erreicht zum Zeitpunkt $t_4$ den oberen Pegel $U_o$ und zum Zeitpunkt $t_5$ den unteren Pegel $U_u$. Diesem geringen Druck entspricht die gemessene Zeit $T_2$. Die Zeitmessungen für $T_1$ und $T_2$ sind reproduzierbar genau, wenn beispielsweise einige tausend Quarzschwingungen zur Bestimmung der Zeiten herangezogen werden.

Es besteht auch die Möglichkeit, nach dem Durchgang der Kurven durch den oberen Pegel $U_o$ die vom Quarz ausgeführten Schwingungen so lange zu zählen, bis eine fest vorgegebene Zeit abgelaufen ist, und dann den Spannungswert zu erfassen, der der eingetretenen Amplitudenänderung entspricht. Bei unterschiedlichen Drücken ergeben sich unterschiedliche Analogwerte, die der Meßwerterfassung zugrundegelegt werden können.

Beim Ausführungsbeispiel nach Figur 1 ist dem Quarz 1 der Widerstand 15 parallel geschaltet. Er ist einstellbar und dient einer Kalibrierung, die im Hinblick auf die Streuung verschiedener Quarze erforderlich ist.

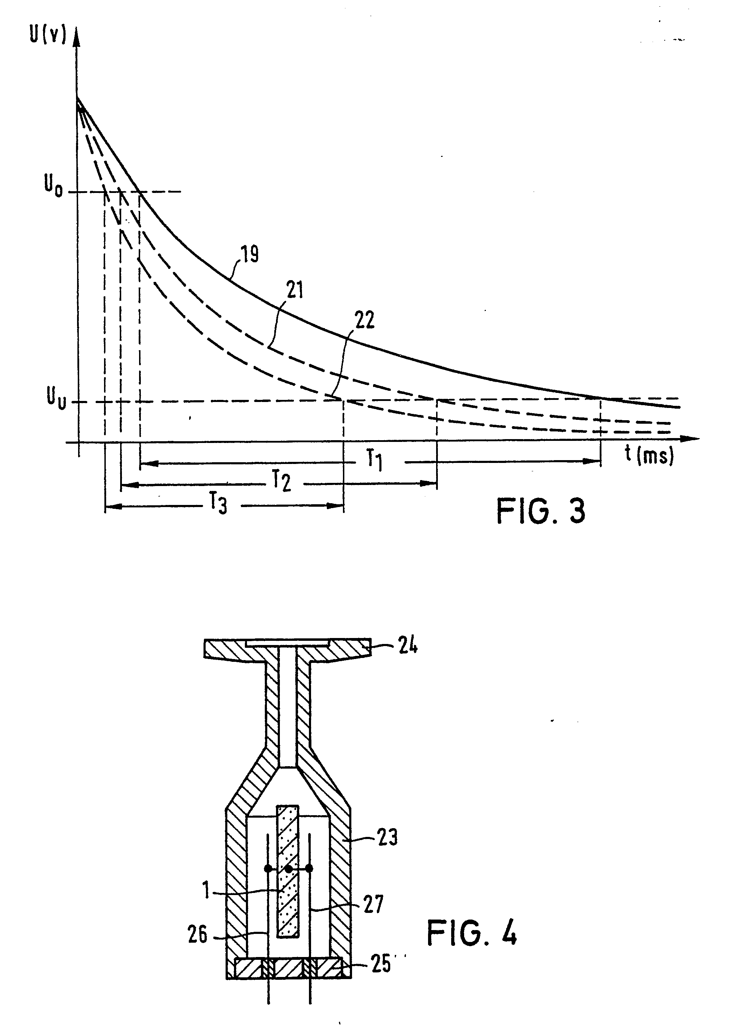

Weiterhin können dem Quarz 1 wahlweise über den Schalter 16 die Widerstände 17 und 18 parallel geschaltet werden. Aus Figur 3 ist die Wirkung der Zuschaltung dieser Widerstände ersichtlich. Die Figur 3 zeigt ein Koordinatensystem, in dem die Spannung, die die zeitliche Amplitudenänderung kennzeichnet, gegen die Zeit aufgetragen ist. Die ausgezogen dargestellte Kurve 19 entspricht der Amplitudendämpfung bei einem bestimmten Druckwert. Dem Quarz 1 ist in diesem Fall kein Widerstand parallel geschaltet oder, anders ausgedrückt, der parallel geschaltete Widerstand ist unendlich groß. Die Zeit, die zwischen dem Durchtritt der Kurve 19 durch die beiden Pegel $U_o$ und $U_u$ liegt, ist mit $T_1$ bezeichnet.

Die Kurve 21 entspricht dem Amplitudenverlauf für den Fall, daß dem Quarz 1 ein relativ großer, aber endlicher Widerstand (17) parallel geschaltet ist, beispielsweise 1 Megohm. Die Zeit zwischen dem Durchtritt der Kurve 21 durch die Pegel $U_o$ und $U_u$ ist kürzer und mit $T_2$ bezeichnet. Schließlich zeigt die Kurve 22 den Amplitudenverlauf bei einem dem Quarz 1 parallel geschalteten, relativ kleinen Widerstand von z. B. 0,1 Megohm. Die Zeit $T_3$ zwischen den Pegeln $U_o$ und $U_u$ ist noch kürzer.

Die Wirkung eines dem Quarz 1 parallel geschalteten Widerstandes liegt demnach darin, daß eine Verkürzung der Meßzeiten, d. h. eine Verdeutlichung der Signalveränderungen, eintritt. Die Verwendung dieser Widerstände ist dann zweckmäßig, wenn man zur Auswertung die Differenz der Zeitmessungen $(T_1 - T_2)$ oder $(T_2-T_3)$ verwendet. Man erhält dann eine digitale Meßgröße, die mit geringer werdendem Druck (sogar) anwächst. Die Auflösungsgrenze der Messung ist dann nur noch von der Quarzgüte und der Genauigkeit der Temperierung des Meßkopfes abhängig.

ist dann nur noch von der Quarzgüte und der Genauigkeit der Temperierung des Meßkopfes abhängig.

Figur 4 zeigt einen Quarz 1, der in eine Meßröhre 23 eingebaut ist. Über den Flansch 24 wird eine Meßröhre 23 an den Rezipienten angeschlossen, in dem eine Druckmessung gewünscht wird. Der Quarz 1 ist ein streifenförmiger Biegeschwinger. Daneben können auch streifenförmige Dehnungsschwinger oder Stimmgabel-Quarze eingesetzt werden. Quarze mit einer Frequenz von 100 kHz und einer Güte von ca. 40.000 sind beispielsweise für den Einsatz geeignet. Quarze dieser Art haben eine hohe Empfindlichkeit für Einflüsse, die auf der Gasreibung beruhen.

Zweckmäßig besitzt das Quarzelement 1 einen temperaturkompensierten Schnitt, und/oder das Gehäuse der Meßröhre 23 ist temperaturstabilisiert. Ein Einfluß der Umgebungstemperatur auf das Meßergebnis kann dadurch vermieden werden.

Die Meßröhre ist auf ihrer dem Flansch 24 gegenüberliegenden Stirnseite mit einer Platte 25 vakuumdicht abgeschlossen. Durch diese Platte 25 sind die Versorgungs- und Signalleitungen 26, 27 isoliert hindurchgeführt und bilden gleichzeitig die Träger für den Quarz 1. Heiße Drähte, Plasmen oder Hochspannungen werden innerhalb der Meßröhre 23 nicht verwendet. Die Meßröhre kann deshalb ohne weiteres auch bei der Anwesenheit von erhöhten Wasserstoffkonzentrationen eingesetzt werden. Günstig ist zudem, daß die Röhre keine Pumpwirkung besitzt.

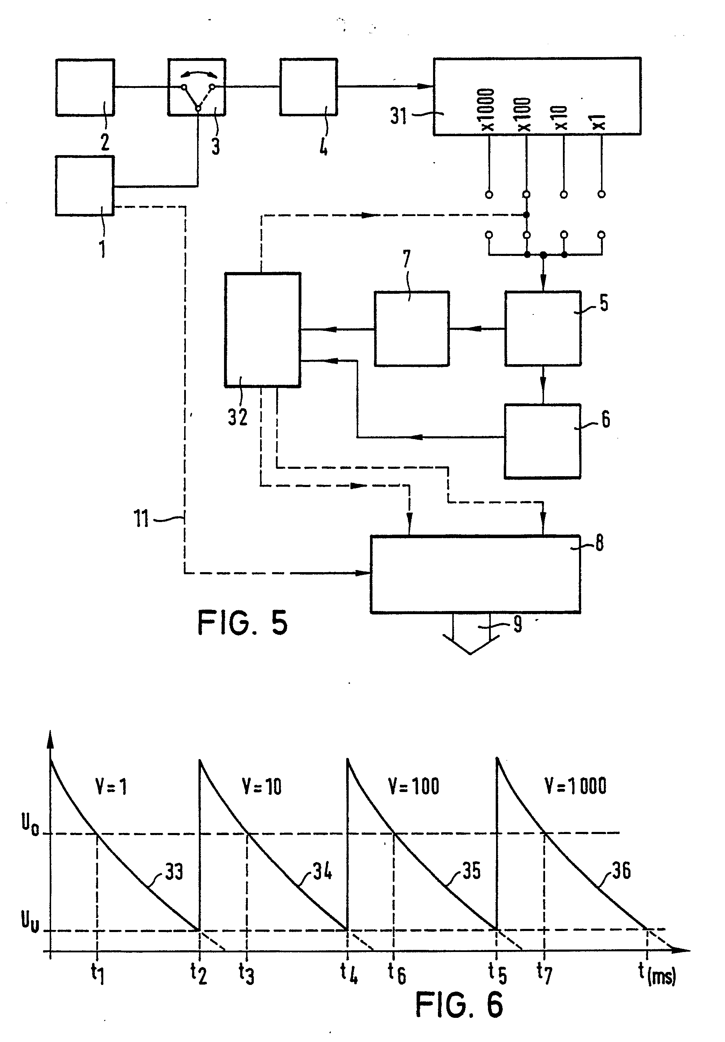

Figur 5 zeigt nochmals ein Schaltbild, bei dem sich an den Impedanzwandler 4 ein gesonderter Verstärker 31 anschließt, der im Laufe eines Meßzyklus mehrere, im dargestellten Fall vier, Verstärkungsstufen durchläuft. Über den Demodulator 5 wird das vom Verstärker 31 gelieferte Signal wieder den Triggerstufen 6 und 7 zugeführt. Die den oberen und unteren Triggerpegel bestimmenden Stufen 6 und 7 geben - im Unterschied zur Schaltung nach Figur 1 - ihr Signal über eine Steuerlogik 32 an die Zählstufe 8 mit dem digitalen Ausgang 9.

Die Figur 6 läßt die Funktion der Schaltung nach Figur 5 erkennen. In der ersten Phase eines Meßzyklus hat die Verstärkungsstufe 31 den Verstärkungsfaktor 1. Das die gedämpfte Schwingung kennzeichnende Spannungssignal entspricht dem Kurvenabschnitt 33 und erreicht zum Zeitpunkt $t_1$ den oberen Pegel $U_o$. Die Zählung der Schwingungen des Quarzes beginnt. Zum Zeitpunkt $t_2$ erreicht die Kurve 33 den unteren Pegel $U_u$. Zu diesem Zeitpunkt oder zu einem vorab eingestellten Zeitpunkt wird über die Steuerlogik 32 eine Umschaltung der Verstärkung bewirkt, und zwar auf den Verstärkungsfaktor 10.

Nach der Verstärkung entspricht die Amplitudenänderung dem Kurvenabschnitt 34, der zum Zeitpunkt $t_3$ den oberen und zum Zeitpunkt $t_4$ den unteren Pegel erreicht. Da die Kurvenabschnitte 33 und 34 die gleiche Steilheit haben, ist ihr Durchgang durch die obere Pegel-Spannung zeitlich genau registrierbar. Ohne Verstärkung wäre der Durchgang zum Zeitpunkt $t_3$ wesentlich flacher, so daß die Auflösung, mit der die Anzahl der Quarzschwingungen in der Meßzeit festgestellt werden kann, nicht so hoch ist. Zum Zeitpunkt $t_3$ könnte bereits von der Steuerlogik 32 ein Stopsignal an die Zählstufe 8 abgegeben werden. Infolge der zehnmaligen Verstärkung läge bereits ein genaueres Meßsignal vor im Vergleich zur Meßwertbildung ohne Verstärkung.

Zweckmäßig ist es jedoch, noch ein oder zwei weitere Verstärkungen, jeweils um eine Zehnerpotenz, vorzunehmen, also auf den Faktor 100 zum Zeitpunkt $t_4$ und auf den Faktor 1000 zum Zeitpunkt $t_5$. Dadurch ergeben sich weitere Kurvenabschnitte 35 und 36, die den Kurvenabschnitten 33 und 34 entsprechen. Es wird erreicht, daß die jeweiligen Schnitte dieser Kurvenabschnitte mit dem oberen Triggerpegel zu den Zeitpunkten $t_6$ und $t_7$ immer eine hohe und gleichbleibende Steilheit haben, so daß die Anzahl der vom Quarz ausgeführten Schwingungen mit hoher Auflösung bestimmt werden kann. Da nur ein Triggerpegel $U_o$ benötigt wird, den alle vier Kurven 33 bis 36 schneiden, ist eine eventuelle Verschiebung dieses Pegels infolge Drift ohne Einfluß auf das Meßergebnis. Der untere Triggerpegel ist völlig unkritisch, da hierdurch keine Beeinflussung der Meßzeiten erfolgt. Eine Verlängerung der Meßzeit muß allerdings zu Gunsten dieser Vorteile in Kauf genommen werden.

**Ansprüche**

1. Verfahren zur Messung des Druckes mit Hilfe eines Gasreibungsvakuummeters, das mit einem Oszillator und mit einem Schwingquarz als Sensor ausgerüstet ist und bei dem die druckabhängigen Dämpfungserscheinungen der Quarzschwingungen zur Meßwertbildung herangezogen werden, dadurch gekennzeichnet , daß zur Meßwerterfassung der Oszillator (2) vom Schwingquarz (1) getrennt wird und daß aus dem Ausschwingverhalten des Quarzes der Druckwert gewonnen wird.

2. Verfahren nach Anspruch 1, dadurch gekennzeichnet , daß der Meßwerterfassung eine Messung derjenigen Zeit zugrundegelegt wird, die für das Absinken der Schwingungsamplitude zwischen zwei festen Pegeln ($U_o$ und $U_u$) benötigt wird.

3. Verfahren nach Anspruch 2, dadurch gekennzeichnet , daß für die Zeitmessung die Schwingungen des Quarzes gezählt werden.

4. Verfahren nach Anspruch 1, dadurch gekennzeichnet , daß der Meßwerterfassung eine Messung desjenigen Analogwertes zugrundegelegt wird, der sich nach Durchzählen einer fest vorgegebenen Schwingungsanzahl nach dem Durchgang durch einen oberen Triggerpegel $U_o$ ergibt.

5. Verfahren nach Anspruch 1, 2, 3 oder 4, dadurch gekennzeichnet , daß das die Schwingungsamplitude kennzeichnende Signal während eines Meßzyklus mehrfach verstärkt wird.

6. Verfahren nach Anspruch 5, dadurch gekennzeichnet , daß das die Schwingungsamplitude kennzeichnende Spannungssignal dreimal um jeweils eine Zehnerpotenz verstärkt wird.

7. Verfahren nach einem der vorhergehenden Ansprüche, dadurch gekennzeichnet , daß durch Zuschaltung von Widerständen (17, 19) parallel zum Quarz (1) die Meßzeit verkürzt wird.

8. Verfahren nach Anspruch 1 und 7, dadurch gekennzeichnet , daß die Differenzen der Meßzeiten bei unterschiedlichen Widerständen (17, 18) als Druckanzeige verwendet werden.

9. Schaltung zur Durchführung des Verfahrens nach einem der vorhergehenden Ansprüche, dadurch gekennzeichnet , daß sie einen den Quarz (1) vom Oszillator (2) trennenden und gleichzeitig den Quarz (1) mit einem nachfolgenden Impedanzwandler (4) verbindenden Schalter (3), Triggerstufen (6, 7) und eine Zählerstufe (8) umfaßt.

10. Schaltung nach Anspruch 9, dadurch gekennzeichnet , daß die Zählerstufe (8) mit dem Quarz (1), verbunden ist.

11. Schaltung nach Anspruch 9 oder 10, dadurch gekennzeichnet , daß eine Verstärkerstufe (31) und einer Steuerlogik (32) zur Veränderung der Verstärkung der Stufe (31) während eines Meßzyklus vorgesehen sind.

12. Schaltung nach einem der vorhergehenden Ansprüche 9 bis 11, dadurch gekennzeichnet , daß dem Meßquarz ein Widerstand (15) ständig zu Kalibrierzwecken parallelgeschaltet ist.

13. Für die Durchführung des Verfahrens nach einem der Ansprüche 1 bis 8 und für den Einsatz in einer Schaltung nach den Ansprüche 9 bis 12 geeigneter Quarz (1), dadurch gekennzeichnet , daß er als streifenförmiger Quarzschwinger, vorzugsweise vom Biegeschwinger-Typ, ausgebildet ist.

14. Für die Durchführung des Verfahrens nach einem der Ansprüche 1 bis 8 und für den Einsatz in einer Schaltung nach den Ansprüchen 9 bis 13 geeigneter Quarz, dadurch gekennzeichnet , daß er einen temperaturkompensierten Schnitt besitzt.

15. Quarz nach Anspruch 13 oder 14, dadurch gekennzeichnet , daß er sich in einem temperaturstabilisierten Gehäuse (23) befindet.

FIG.1

Trigger 0

Trigger U

FIG. 2

FIG. 3

FIG. 4

FIG. 5

FIG. 6

Europäisches
Patentamt

# EUROPÄISCHER RECHERCHENBERICHT

Nummer der Anmeldung

EP 89 11 2159

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | DE-A-3 641 842 (P. LEIDERER) * ganze Schrift * --- | 1 | G 01 L 9/08 G 01 L 21/22 |
| A | DE-A-2 905 216 (R. WILLWEBER) * Anspruch 1a * ----- | 1 | |

**RECHERCHIERTE SACHGEBIETE (Int. Cl.5)**

G 01 L 9/08
G 01 L 21/16

Der vorliegende Recherchenbericht wurde für alle Patentansprüche erstellt

| Recherchenort | Abschlußdatum der Recherche | Prüfer |
|---|---|---|
| BERLIN | 19-02-1990 | KOEHN G |